# EUROPÄISCHE PATENTSCHRIFT

(11) **EP 1 814 919 B1**
(45) Veröffentlichungstag und Bekanntmachung des Hinweises auf die Patenterteilung: **24.09.2008**
(21) Anmeldenummer: 05800513.3
(22) Anmeldetag: 20.10.2005
(51) Int. Cl.: C08B 15/00

(54) **VERFAHREN ZUR HERSTELLUNG VON MEHRSCHICHTIGEN FLÄCHENGEBILDEN, PARTIKELN ODER FASERN**
METHOD FOR PRODUCING MULTI-LAYERED SURFACE STRUCTURES, PARTICLES OR FIBRES
PROCEDE DE PRODUCTION DE STRUCTURES PLANES MULTICOUCHES, DE PARTICULES, OU DE FIBRES

(30) Priorität: 26.10.2004 DE 102004052120
(43) Veröffentlichungstag der Anmeldung: 08.08.2007
(73) Patentinhaber: BASF SE, 67056 Ludwigshafen (DE)
(72) Erfinder: FREUDENBERG, Uwe, 01159 Dresden (DE); ZSCHOCHE, Stefan, 01109 Dresden (DE); WERNER, Carsten, 01219 Dresden (DE); SCHMIDT, Kati, 67063 Ludwigshafen (DE); BEHRENS, Sven, Holger, 68159 Mannheim (DE); AUWETER, Helmut, 67117 Limburgerhof (DE)
(74) Vertreter: Isenbruck, Günter
(86) Internationale Anmeldenummer: PCT/EP2005/011302
(87) Internationale Veröffentlichungsnummer: WO 2006/045534

(56) Entgegenhaltungen:
- DE-A1- 1 803 412
- US-B1- 6 379 753

## Beschreibung

Die vorliegende Erfindung betrifft ein Verfahren zur Herstellung von mehrschichtigen Flächengebilden, Partikeln oder Fasern sowie mehrschichtige Flächengebilde, Partikel oder Fasern, die durch dieses Verfahren herstellbar, d.h. erhältlich sind. Die Erfindung betrifft weiter mehrschichtige Flächengebilde, Partikel oder Fasern, enthaltend ein kovalent an ein flächiges, partikelförmiges oder faserförmiges Trägermaterial gebundenes reaktives Polycarbonsäurederivat und eine Celluloseschicht. Die Erfindung betrifft auch die Verwendung der genannten mehrschichtigen Flächengebilde, Partikel oder Fasern zur Hydrophilierung von Oberflächen.

Verfahren zur Herstellung mehrschichtiger Flächengebilde, Partikel oder Fasern durch Aufbringen von Cellulose auf ein flächiges, partikelförmiges oder faserförmiges Trägermaterial sind im Stand der Technik mehrfach beschrieben.

Gunnars et al. (Cellulose (2002) 9:239-249: "Model films of cellulose: I. Method development and initial results") beschreiben die Herstellung dünner Cellulosefilme von 20 nm bis 270 nm Dicke, die nicht-kovalent über eine gesättigte Polymerschicht verankert werden. Nachteil einer solchen, allein durch physikalische Adsorption vermittelten Bindung der Celluloseschicht ist deren mangelnde Stabilität, insbesondere gegenüber der Wirkung von Scherkräften.

Das Aufbringen eines reaktiven Polycarbonsäurederivats auf ein flächiges, partikelförmiges oder faserförmiges Trägermaterial, enthaltend zur kovalenten Bindung befähigte Gruppen, ist ebenfalls im Stand der Technik beschrieben.

Pompe et al. (Biomacromolecules (2003) 4:1072-1079: "Maleic anhydride copolymersa versatile platform for molecular biosurface engineering") offenbaren das Aufbringen eines alternierenden Maleinsäureanhydrid-Copolymers auf ein flächiges Trägermaterial, das zuvor mit zur kovalenten Bindung befähigten Gruppen versehen wurde. An die so erhaltene. Oberfläche werden Moleküle mit unterschiedlichen funktionellen Gruppen gekoppelt, beispielsweise 1,4-Butandiamin, an denen biologisch aktive Moleküle, beispielsweise Proteine, immobilisiert werden sollen. Eine Anbindung von Cellulose an die so erhaltenen Oberflächen ist nicht beschrieben.

In US 6,379,753 B1 ist ein Verfahren zur Herstellung von mehrschichtigen Fasern beschrieben, das das Aufbringen eines Maleinsäüreanhydridpolymers auf vorhandene Hydroxyl-, Amino-, Sulfhydryl- oder Carboxylgruppen von Wolle, Baumwolle oder Kunstfasern umfasst. Das Maleinsäureanhydridpolymer liegt in wässriger Lösung vor, und die Reaktion verläuft unter der Katalyse von NaH₂PO₂ sowie unter Anwendung von Hitze, wobei der Temperaturbereich nicht definiert ist. Es ist auch eine kovalente Bindung von Cellulose an das gelöste Maleinsäureanhydridpolymer beschrieben, gefolgt von der kovalenten Kopplung des mit Cellulose verbundenen Maleinsäureanhydridpolymers an das Trägermaterial. Die Nachteile einer solchen Reaktionsreihenfolge sind beispielsweise eine mögliche Beeinflussung des Aufbaus der Celluloseschicht durch die nachfolgende Kopplungsreaktion an das Trägermaterial und die Schwierigkeit, bei einer Reaktion, die in Lösung stattfindet, die Dicke der gebildeten Celluloseschicht zu beeinflussen.

Ein weiteres Beispiel für die kovalente Bindung von biologischen Molekülen an gelöste Maleinsäureanhydridpolymere ist in der EP-A 0 561 722 beschrieben. Nach dem dort offenbarten Verfahren wird zunächst ein Maleinsäureanhydridpolymer in organischem Lösungsmittel gelöst und nachfolgend durch Derivatisierung wasserlöslich gemacht. Diese derivatisierten Maleinsäureanhydridpolymere werden eventuell noch so modifiziert, dass sie direkt oder indirekt an ein festes Trägermaterial immobilisiert werden können. Das so erhaltene Molekül wird schließlich mit einem biologischen Molekül, beispielsweise einem Protein, gekoppelt. Die Anbindung von Polysacchariden an die hydrophilisierten Maleinsäureanhydridpolymere wird nur zum Zweck der Immobilisierung an die festen Trägermaterialien beschrieben, d.h. das Polysaccharid befindet sich in diesem Fall zwischen Maleinsäureanhydridpolymer und dem Trägermaterial und bildet nicht die oberste Schicht eines mehrschichtigen Flächengebildes. Wie in der vorstehend beschriebenen US 6,379,753 findet eine Kopplung des funktionalisierenden Polysaccharids mit dem Maleinsäureanhydridpolymer auch in diesem Verfahren vor einer Anbindung an ein festes Trägermaterial statt. Damit ergeben sich auch hier die bereits vorstehend erwähnten Nachteile.

Aufgabe der vorliegenden Erfindung war daher die Entwicklung eines Verfahrens zur stabilen Anbindung von Celluloseschichten an unterschiedliche Trägermaterialien, wobei der Aufbau der Celluloseschichten nicht beeinträchtigt wird, und die Trägermaterialien in beliebiger Form vorliegen können.

Die Aufgabe wird gelöst durch ein Verfahren zur Herstellung von mehrschichtigen Flächengebilden, Partikeln oder Fasern enthaltend die getrennten Schritte
(a) Aufbringen eines reaktiven Polycarbonsäurederivats auf ein flächiges, partikelförmiges oder faserförmiges Trägermaterial, das bereits gegenüber dem Polycarbonsäurederivat reaktive, zur kovalenten Bindung befähigte Gruppen enthält oder vorab damit versehen worden ist,
(b) gegebenenfalls Erwärmen des in Schritt (a) behandelten Trägermaterials auf 60°C bis 130°C, vorzugsweise auf 80°C bis 120°C unter Beschleunigung, Vervollständigung oder weiterer Optimierung der kovalenten Bindungen,
(c) Aufbringen von gegenüber dem Polycarbonsäurederivat zu kovalenter Bindung befähigter Cellulose auf das Trägermaterial.

Die Aufgabe wird auch durch mehrschichtige Flächengebilde, Partikel oder Fasern gelöst, die durch das genannte Verfahren erhältlich sind.

Weiter wird die Aufgabe durch mehrschichtige Flächengebilde, Partikel oder Fasern, insbesondere durch mehrschichtige Flächengebilde oder Partikel, gelöst, die an ein flächiges, partikelförmiges oder faserförmiges Trägermaterial gebundene Polycarbonsäurederivate und eine Celluloseschicht enthalten, wobei die Celluloseschicht aus einer ersten Celluloseschicht, die kovalent an das Polycarbonsäurederivat gebunden ist und einer zweiten Celluloseschicht, die nicht-kovalent an die erste Celluloseschicht angebunden ist, besteht.

Die Aufgabe wird auch durch die Verwendung der erfindungsgemäßen mehrschichtigen Flächengebilde, Partikel oder Fasern und des erfindungsgemäßen Verfahrens zur Herstellung von mehrschichtigen Flächengebilden, Partikeln oder Fasern zur Hydrophilierung von Oberflächen, insbesondere zur Haftvermittlung zwischen hydrophoben und hydrophilen Materialien und zur Verbesserung der Waschbarkeit von synthetischen Fasern gelöst, wobei die Oberflächen, die durch das Verfahren hydrophiliert werden, das flächige, partikelförmige oder faserförmige Trägermaterial bilden.

Unter einem "reaktiven Polycarbonsäurederivat" wird ein Molekül verstanden, das mehr als ein reaktives Derivat einer Carboxylgruppe, beispielsweise ein Carbonsäureanhydrid, ein Carbonsäurechlorid oder einen aktivierten Carbonsäureester, insbesondere ein Carbonsäureanhydrid aufweist und in der Lage ist, über mindestens eine der reaktiven Carboxylgruppenderivate eine kovalente Bindung mit funktionellen Gruppen eines anderen Moleküls, insbesondere unter Ausbildung von Amid- oder Esterbindungen, einzugehen.

Unter "weiterer Optimierung der kovalenten Bindungen" wird im Sinne der vorliegenden Erfindung insbesondere die durch Erwärmen katalysierte Umwandlung von bei dem Aufbringen eines reaktiven Polycarbonsäurederivats auf ein flächiges, partikelförmiges oder faserförmiges Trägermaterial, das bereits gegenüber dem Polycarbonsäurederivat reaktive, zur kovalenten Bindung befähigte Gruppen enthält oder vorab damit versehen worden ist, zunächst gebildeten Amidbindungen in cyclische, hydrolysestabile Imidbindungen verstanden.

Unter "zur kovalenten Bindung befähigten Gruppen" werden im Sinne der vorliegenden Erfindung reaktive, funktionelle Gruppen wie Amino-, Hydroxyl-, Sulfhydryl- und Carboxylgruppen verstanden, die in der Lage sind, mit dem reaktiven Polycarbonsäurederivat im Wesentlichen spontan und ohne Zufügen eines Katalysators unter Ausbildung einer kovalenten Bindung zu reagieren.

Unter "zu kovalenter Bindung befähigter Cellulose" sind analog hierzu Cellulosemoleküle zu verstehen, die reaktive Hydroxylgruppen enthalten, die in der Lage sind, mit dem reaktiven Polycarbonsäurederivat im Wesentlichen spontan und ohne Zufügen eines Katalysators unter Ausbildung einer kovalenten Bindung zu reagieren.

Unter "Trägermaterial" ist im Sinne der vorliegenden Erfindung ein flächiger, partikel- oder faserförmiger Festkörper in beliebiger Form zu verstehen, der bereits gegenüber dem Polycarbonsäurederivat reaktive, zur kovalenten Bindung befähigte Gruppen enthält oder mit solchen Gruppen versehen werden kann.

Unter "Kunststoffen" sind im Sinne der vorliegenden Erfindung Stoffe zu verstehen, deren Grundbestandteil synthetisch oder halbsynthetisch erzeugte Polymere sind und die zum Beispiel in Form von Granulaten, Fasern oder Folien vorliegen.

Unter einem "flächigen Trägermaterial" im Sinne der vorliegenden Erfindung ist beispielsweise ein Trägermaterial in Form von Platten, Scheiben, Gittern, Membranen oder Folien zu verstehen. Unter einem "partikelförmigen Trägermaterial" sind im Sinne der vorliegenden Erfindung Partikel mit einer Größe von 10 nm bis 100 µm, bevorzugt 20 nm bis 5 µm, vorzugsweise bestehend aus Silikaten, Kieselgelteilchen, Talk, Tonmineralien, Metalloxiden, insbesondere Zinkoxid und Titandioxid, Calziumcarbonat, Calziumsulfat oder Bariumsulfat zu verstehen. Unter einem "faserförmigen Trägermaterial" sind im Sinne der vorliegenden Erfindung Fasern mit einer Dicke von 5 bis 500 µm, vorzugsweise bestehend aus Cellulose oder Cellulosederivaten, Polyamiden, Polyestern, Polyurethanen oder Polypropylen zu verstehen.

Unter "Amin-terminierten Alkylsilanen" sind im Sinne der vorliegenden Erfindung Alkylsilane zu verstehen, die an einem endständigen C-Atom eine primäre Aminogruppe aufweisen. Ein Beispiel hierfür ist 3-Aminopropyl-dimethylethoxysilan.

Unter einem "vortemperierten Trägermaterial" ist im Sinne der vorliegenden Erfindung ein Trägermaterial zu verstehen, das vor dem Aufbringen einer Lösung, zum Beispiel einer Celluloselösung, vorzugsweise auf eine Temperatur von 40°C bis 120°C, besonders bevorzugt 40°C bis 80°C, vorgewärmt wird.

Unter einer "verbesserten Waschbarkeit" von Fasern ist im Sinne der vorliegenden Erfindung vor allem eine verbesserte Spreitbarkeit, d.h. eine erhöhte Benetzbarkeit der Faser mit Wasser zu verstehen.

Das erfindungsgemäße Verfahren weist die folgenden Vorteile gegenüber dem Stand der Technik auf: Dadurch, dass das Aufbringen eines reaktiven Polycarbonsäurederivats und das Aufbringen der Cellulose auf das Trägermaterial in getrennten Schritten durchgeführt werden, besteht keine Notwendigkeit, an den Molekülen Modifikationen in der Art vorzunehmen, dass beide Reaktionen nur im gleichen Lösungsmittel möglich ist. Durch das Aufbringen der Cellulose auf bereits an das Trägermaterial gebundenes Polycarbonsäurederivat ist die Steuerung der Dicke der resultierenden Celluloseschicht erleichtert, und der Schichtaufbau wird nicht durch eine nachfolgende Kopplungsreaktion beeinflusst.

Das reaktive Polycarbonsäurederivat reagiert im Wesentlichen spontan mit den reaktiven, zur kovalenten Bindung befähigten Gruppen des Trägermaterials. Sofern es sich bei den reaktiven Gruppen des Trägermaterials um die bevorzugten Aminogruppen handelt, entstehen bei dieser Reaktion zunächst Amidbindungen. Diese Bindungen können durch Erwärmen des in Schritt (a) behandelten Trägermaterials in das hydrolysestabile cyclische Imid überführt werden. Die Bindung des reaktiven Polycarbonsäurederivats an das Trägermaterial erfolgt nur über einen geringen Anteil der reaktiven Gruppen der Polycarbonsäure, so dass die verbleibenden reaktiven Gruppen für eine nachfolgende Reaktion mit den Hydroxylgruppen der Cellulase zur Verfügung stehen.

Bevorzugte reaktive Polycarbonsäurederivate sind Copolymere, insbesondere alternierende Copolymere, enthaltend als Monomere ein reaktives Carbonsäurederivat, beispielsweise Maleinsäureanhydrid, und eine Verbindung der Formel CH₂=CH-R mit R gleich H, Alkyl mit 1 bis 12 C-Atomen, vorzugsweise 1 bis 6 C-Atomen, besonders bevorzugt 1 bis 3 C-Atomen, O-Alkyl mit 1 bis 12 C-Atomen, vorzugsweise 1 bis 6 C-Atomen, besonders bevorzugt 1 bis 3 C-Atomen, Aryl, vorzugsweise Phenyl, oder Heteroaryl.

Beispiele für bevorzugte reaktive Polycarbonsäurederivate sind alternierende Maleinsäureanhydrid-Copolymere, insbesondere Poly(propen-alt-maleinsäureanhydrid), Poly(styrol-*alt*-maleinsäureanhydrid) oder Poly(ethylen-alt-maleinsäureanhydrid).

Die Verwendung reaktiver Polycarbonsäurederivate in Form von alternierenden Copolymeren ermöglicht die Herstellung mehrschichtiger Flächengebilde, Partikel oder Fasern mit einer Vielzahl von physikochemischen Eigenschaften in Abhängigkeit von dem eingesetzten Copolymer.

Das reaktive Polycarbonsäurederivat wird im Allgemeinen aus einer Lösung von 0,05 Gew.-% bis 0,2 Gew.-%, vorzugsweise 0,08 Gew.-% bis 0,15 Gew.-% des reaktiven Polycarbonsäurederivats in organischen Lösungsmitteln, insbesondere Tetrahydrofuran, Aceton oder 2-Butanon adsorptiv auf das Trägermaterial aufgebracht. Die Lösung des reaktiven Carbonsäurederivats kann grundsätzlich mit einer beliebigen, zum Aufbringen von Material aus einer Lösung geeigneten Methode auf das Trägermaterial aufgebracht werden. Beispiele für solche Methoden sind Tauchen, Sprühen oder "spin-coating", vorzugsweise wird das reaktive Polycarbonsäurederivat mittels "spin-coating" als dünner Film auf das Trägermaterial aufgebracht. Das in dem Film enthaltene reaktive Polycarbonsäurederivat reagiert im Wesentlichen spontan unter Bildung des Carbonsäureamids mit dem Trägermaterial. Reste von nicht-kovalent gebundenem Copolymer können durch Spülen mit dem jeweiligen Lösungsmittel entfernt werden.

Als Trägermaterialien kommen Siliziumverbindungen, Metalle, Kunststoffe und Naturfasern in beliebiger Form, insbesondere in Form von Partikeln, Gittern, Fasern, Membranen, Folien, Platten oder Scheiben zum Einsatz. Bevorzugte Trägermaterialien und - formen sind Siliziumscheiben, Objektträger aus Glas, Glas- beziehungsweise Siliziumdioxid, synthetische Textilfasern wie Polyamid, Naturfasern wie Wolle oder Baumwolle oder Polymermembranen und folien.

Die reaktiven, zur kovalenten Bindung befähigten Gruppen des Trägermaterials sind im Allgemeinen ausgewählt aus der Gruppe bestehend aus reaktiven Amino-, Hydroxyl-, Sulfhydryl- und Carboxylgruppen, insbesondere reaktiven Aminogruppen.

Trägermaterialien wie Wolle, Baumwolle oder Polyamide verfügen bereits über gegenüber der Polycarbonsäure oder einem ihrer Derivate reaktive, zur kovalenten Bindung befähigte Gruppen. Andere Trägermaterialien, beispielsweise Siliziumscheiben oder Gläser, müssen vor dem Aufbringen des reaktiven Polycarbonsäurederivats zunächst mit reaktiven, zur kovalenten Bindung befähigten Gruppen versehen werden. Gemäß einer bevorzugten Ausführungsform der vorliegenden Erfindung werden Trägermaterialien, die keine gegenüber dem Polycarbonsäurederivat reaktiven, zur kovalenten Bindung befähigten Gruppen enthalten, vor dem Aufbringen des Polycarbonsäurederivats durch Umsetzung mit Amin-terminierten Alkylsilanen oder durch Niederdruck-Plasmabehandlung in ammoniakalischen Atmosphären mit reaktiven Aminogruppen versehen.

Die Umsetzung mit Amin-terminierten Alkylsilanen erfolgt beispielsweise, indem Oberflächen aus Glas zunächst in einer Mischung aus wässrigen Ammoniaklösungen und Wasserstoffperoxid oxidiert und anschließend mit 3-Aminopropyl-dimethylethoxy-silan oberflächenmodifiziert werden. Die Niederdruck-Plasmabehandlung in ammoniakalischen Atmosphären wird vorzugsweise zur Einführung reaktiver Aminogruppen in Polymermaterialien, beispielsweise elastomeres Poly(dimethylsiloxan) verwendet.

Vor dem Aufbringen auf das bereits mit einem reaktiven Polycarbonsäurederivat modifizierten Trägermaterial wird die Cellulose im Allgemeinen bei 90°C bis 115°C, bevorzugt bei 90°C bis 100°C in N-Methylmorpholin (NMMO)-monohydrat gelöst und bei einer Temperatur von 70°C bis 90°C, vorzugsweise 70°C bis 80°C oder 75°C bis 85°C aus einer Lösung von 1 Gew.-% bis 4 Gew.-% Cellulose auf ein Trägermaterial aufgebracht. Das Trägermaterial wird gegebenenfalls auf 40°C bis 120°C, insbesondere auf 40°C bis 80°C vortemperiert. Gegebenenfalls können der Celluloselösung in NMMOmonohydrat vor dem Auftragen zur Viskositätseinstellung bis zu 50 Gew.-%, vorzugsweise 20 bis 50 Gew.-% Dimethylsulfoxid (DMSO) oder Dimethylformamid (DMF) zugefügt werden (bezogen auf die resultierende Mischung an NMMO/DMSO bzw. NMMO/DMF). Eine geringere Viskosität erleichtert das nachfolgende Aufbringen der Cellulose, wobei die Viskosität der Lösung mit der Konzentration und dem Molekulargewicht der Cellulose stark ansteigt. Die Celluloselösung kann grundsätzlich mit einer beliebigen, zum Aufbringen von Material aus einer Lösung geeigneten Methode auf das Trägermaterial aufgebracht werden. Beispiele für solche Methoden sind Tauchen, Sprühen oder "spin-coating", vorzugsweise wird die Cellulose mittels "spin-coating" als dünner Film auf das mit dem reaktiven Polycarbonsäurederivat versehene Trägermaterial aufgebracht.

Gegebenenfalls kann außerdem bis zu 2 Gew.-% eines Antioxidans (bezogen auf NMMO bzw. NMMO/DMSO Mischung), beispielsweise Propylgallat, zu der Celluloselösung zugegeben werden.

Nach dem Aufbringen der Celluloselösung auf das Trägermaterial wird im Allgemeinen in einem weiteren Schritt die Cellulose in deionisiertem Wasser, Isopropanol oder einer Mischung aus beiden Lösungsmitteln auf dem Trägermaterial ausgefällt. In Abhängigkeit vom Fällungsmittel kann hierbei die Struktur der ausgefällten Celluloseschichten beeinflusst werden. Bevorzugt ist das Ausfällen in deionisiertem Wasser. Die nach dem erfindungsgemäßen Verfahren hergestellten mehrschichtigen Flächengebilde, Partikel oder Fasern werden an der Luft getrocknet, unter Vakuum bei 30°C bis 100°C, vorzugsweise bei 70°C bis 90°C behandelt und die noch vorhandenen Lösungsmittelreste werden durch intensives Waschen mit deionisiertem Wasser entfernt. Die Proben werden anschließend erneut bei 20°C bis 40°C, vorzugsweise 25°C bis 35°C im Vakuum getrocknet.

Ein weiterer Gegenstand der vorliegenden Erfindung sind mehrschichtige Flächengebilde, Partikel oder Fasern, die durch das erfindungsgemäße Verfahren erhältlich sind. Die Struktur der mehrschichtigen Flächengebilde, Partikel oder Fasern wird dabei über verschiedene Verfahrensparameter beeinflusst. Die Schichtdicke des reaktiven Polycarbonsäurederivats auf dem Trägermaterial ist abhängig von deren Molekulargewicht sowie den Schichtbildungsbedingungen. Beispiele hierfür sind in Beispiel 2 beschrieben. Die Konzentration der Celluloselösung beeinflusst die Dicke der Celluloseschicht auf den Trägermaterialien, wobei aus 1 %iger Lösung eine 10 nm bis 30 nm dicke Schicht, aus 2 %iger Lösung eine 30 nm bis 70 nm dicke Schicht und aus 4 %iger Lösung eine 130 nm bis 300 nm dicke Schicht an Cellulose auf dem Trägermaterial erreicht wird. Beispiele hierfür sind in Beispiel 3 beschrieben. Die Viskosität der Celluloselösung, die beispielsweise mit Dimethylsulfoxid (DMSO) oder Dimethylformamid (DMF) eingestellt werden kann, beeinflusst das Aufbringen der gelösten Cellulose auf das Trägermaterial, wobei eine geringere Viskosität zu geringeren Dicken der Celluloseschicht führt. Eine erhöhte Dauer des spin-coatings führt ebenfalls zu einer geringeren Dicke der Celluloseschicht.

Ein weiterer Gegenstand der vorliegenden Erfindung sind mehrschichtige Flächengebilde, Partikel oder Fasern, vorzugsweise mehrschichtige Flächengebilde oder Partikel, enthaltend kovalent an ein flächiges, partikelförmiges oder faserförmiges Trägermaterial gebundene reaktive Polycarbonsäuren und eine Celluloseschicht, wobei die Celluloseschicht aus einer ersten Celluloseschicht, die kovalent an die reaktiven Polycarbonsäuren gebunden ist und einer zweiten Celluloseschicht, die nicht-kovalent an die erste Celluloseschicht gebunden ist, besteht. Diese nicht-kovalent gebundene zweite Celluloseschicht ist dennoch unlöslich an die erste Celluloseschicht angebunden, d.h., dass sie über 12 Stunden unter Scherbeanspruchung durch strömende wässrige Elektrolytlösungen bei pH-Werten zwischen 2 und 10 dennoch delaminationsstabil ist.

Gemäß einer besonderen Ausführungsform dieses Gegenstands der Erfindung beträgt bei den mehrschichtigen Flächengebilden oder Partikeln die Dicke der Schicht mit der reaktiven Polycarbonsäure 1 nm bis 20 nm, bevorzugt 3 nm bis 10 nm, besonders bevorzugt 3 nm bis 6 nm, die Dicke der ersten Celluloseschicht 2 nm bis 20 nm, bevorzugt 2 nm bis 10 nm, besonders bevorzugt 2 nm bis 5 nm und die Dicke der zweiten Celluloseschicht 15 nm bis 200 nm, bevorzugt 40 nm bis 120 nm. Die Dicke der einzelnen Schichten ist wie oben beschrieben unter anderem durch die Auswahl des Polycarbonsäurederivats sowie durch die Konzentrationen der Lösung des Polycarbonsäurederivats sowie der Cellulose beeinflussbar.

Ein weiterer Gegenstand der vorliegenden Erfindung ist die Verwendung des erfindungsgemäßen Verfahrens zur Herstellung von mehrschichtigen Flächengebilden, Partikeln oder Fasern zur Hydrophilierung von Oberflächen, insbesondere zur Haftvermittlung zwischen hydrophoben und hydrophilen Materialien und zur Verbesserung der Waschbarkeit von synthetischen Fasern, wobei die Oberflächen, die durch das Verfahren hydrophiliert werden, das flächige, partikelförmige oder faserförmige Trägermaterial bilden.

Eine Verbesserung der Haftung zwischen Folien lässt sich beispielsweise durch die Verwendung von Folien erreichen, die mit Hilfe des erfindungsgemäßen Verfahrens mit einer Celluloseschicht modifiziert wurden. Allgemein sind die erfindungsgemäßen mehrschichtigen Flächengebilden, Partikeln oder Fasern besser wasserspreitbar, d.h. die Benetzbarkeit der Materialien mit wässrigen Flüssigkeiten ist erhöht. Dies ermöglicht eine leichtere Reinigung, zum Beispiel eine Verbesserung der Waschbarkeit von synthetischen Fasern.

### Beispiele

### Beispiel 1 Einführen reaktiver Aminogruppen

Siliziumscheiben oder Objektträger aus Glas wurden mit einer Mischung von wässrigen Lösungen von Ammoniak und Wasserstoffperoxid frisch oxidiert und ihre Oberfläche wurde anschließend mit 3-Aminopropyl-dimethylethoxy-silan modifiziert.

Elastomere Poly(dimethylsiloxane) wurden durch Ammoniak-Plasmabehandlung mit reaktiven Aminogruppen versehen. Die Plasmabehandlung wurde in einem computerkontrollierten Microsys-Gerät von Roth & Rau, Deutschland durchgeführt. Das System bestand aus drei Vakuumkammern (i-iii), verbunden zu einer zentralen Probenbearbeitungseinheit. Der mit turbomolekularen Pumpen erhaltene Basisdruck des gesamten Vakuumsystems betrug 10⁻⁷ mbar. (i) Eine Beladungs-Verschlusskammer ("Load-lockchamber") erlaubte die Einführung der Proben in das System unter Beibehaltung des Vakuums in den anderen Kammern. (ii) Für die Plasmabehandlung wurde eine zylindrische Vakuumkammer aus rostfreiem Stahl mit einem Durchmesser von 350 mm und einer Höhe von 350 mm verwendet. Ein ,Micropole' Massenspektrometer von Ferran, USA wurde verwendet, um das Restgas zu überwachen. Oben auf die Kammer wurde eine 2,46 GHz Elektronencyclotronresonanz (ECR) Plasmaquelle RR160 von Roth & Rau mit einem Durchmesser von 160 mm und einer maximalen Stärke von 800 W montiert. Die Plasmaquelle konnte in einem pulsierenden Modus betrieben werden. Das Prozessgas wurde mittels eines Gasflüss-Kontrollsystems in das aktive Volumen der Plasmaquelle eingeführt. Wenn die Plasmaquelle eingeschaltet war, wurde der Druck über ein kapazitives Vakuum-Messgerät gemessen. Die Proben wurden mittels der Bedienungseinheit in das Zentrum der Kammer gebracht. Der Abstand zwischen der Probenposition und dem Anregungsvolumen der Plasmaquelle betrug ca. 200 mm. Die folgenden Parameter wurden verwendet: Energie 400 W, Pulsfrequenz 1000 Hz, Tastverhältnis 5%, Ammoniakgasfluss 15 Standard-cm³/min, Druck 7 x 10⁻³ mbar

### Beispiel 2: Aufbringen eines alternierenden Maleinsäureanhydrid Copolymers

Poly(styrol-alt-maleinsäureanhydrid) (PSMA), Mw 100.000 wurde in einer Konzentration von 0,12 % in THF, Poly(propen-*alt*-mäleinsäureanhydrid) (PPMA), Mw 39.000 wurde in einer Konzentration von 0,1 % in 2-Butanon und Poly(ethylen-*alt-*maleinsäureanhydrid) (PEMA), Mw 125.000 wurde in einer Konzentration von 0,15 % in Aceton/THF (1:2) gelöst. Die Copolymerlösungen wurden mittels spin-coating (RC5, Suess Microtec, Garching, Deutschland, 4000 rpm, 30 s) oder durch Eintauchen in die Lösung auf vorbehandelte Siliziumscheiben oder Glasprobenträger (siehe Beispiel 1) aufgebracht. Die spontan gebildeten kovalenten Bindungen der Polymerfilme mit dem Aminosilan auf dem SiO₂-Trägermaterial wurden durch Erwärmen der Träger auf 120 °C in die cyclischen, hydrolysestabilen Imidbindungen umgewandelt. Reste von nicht-kovalent gebundenem Copolymer wurden durch Spülen mit dem jeweiligen Lösungsmittel entfernt. Diese Bedingungen führten zu Schichtdicken der Polycarbonsäure von 5 ± 0,5 nm für PSMA, 3 nm ± 0,5 für PPMA und 4,8 ± 0,5 nm für PEMA.

### Beispiel 3: Aufbringen von Cellulose auf die nach Beispiel 1 und 2 vorbehandelten Trägermaterialien

0,15 g, 0,3 g bzw. 0,6 g Cellulose (mikrokristalline Cellulose DP 215-250) wurden in 9 g NMMO (gegebenenfalls unter Zugabe von 1 Gew.-% (0,09 g) Propylgallat als Antioxidans) gegeben und unter Rühren innerhalb von 30 min auf bis zu 100°C erhitzt und dadurch gelöst (Cellulose-Konzentrationen der Lösungen: 1 Gew.-%, 2 Gew.-% bzw. 4 Gew.-%). Der Lösung wurden 6 g DMSO zugegeben, resultierend in einer Mischung aus 60 % NMMO und 40 % DMSO. Nach der Zugabe des DMSO wurde die Lösung auf 70°C abgekühlt. Die so hergestellten Lösungen wurden auf die mit Maleinsäureanhydrid-Copolymeren beschichteten und gegebenenfalls vortemperierten Probenträgern mittels spin-coating bei 45°C bis 50°C mit 3000 rpm für 15 s bzw. 60 s aufgebracht. Im Anschluss wurden die Celluloseschichten durch Eintauchen der Probenträger in deionisiertes Wasser ausgefällt. Nach dem Lufttrocknen der so präparierten Celluloseschichten über Nacht erfolgten Vakuumtrocknung bei 90°C für 2 h und intensives Waschen (3 mal 1 h) mit deionisiertem Wasser zur Entfernung noch vorhandener Lösungsmittelreste. Alle so beschichteten Trägermaterialien wurden erneut bei 30°C unter Vakuum getrocknet. In Abhängigkeit von der Cellulosekonzentration und der Dauer des spin-coatings wurden bei Verwendung von PEMA als Polycarbonsäure folgende Gesamt-Schichtdicken erhalten:

| **Cellulosekonz. [Gew.-%]** | **Dauer des spin-coating [s]** | **Schichtdicke [nm]** |
|---|---|---|
| 1 | 15 60 | 22 ± 2 16 ± 2 |
| 2 | 15 60 | 58 ± 4 39 ± 2 |
| 4 | 15 60 | 274 ± 8 172 ± 4 |

### Beispiel 4: Bestimmung der Schichtdicke

Die Schichtdicke der lufttrockenen Schichten wurde durch Ellipsometrie (VASE 44 M, Woollam, Lincoln, NE) ermittelt. Der ermittelte Brechungsindex der Cellulosefilme lag bei 1.54 ± 0.01 (bei 630.1 nm).

### Beispiel 5: Stabilität der Beschichtungen

Die gemäß den Beispielen 1, 2 und 3 hergestellten beschichteten Siliziumscheiben oder Glasprobenträger wurden über 12 Stunden bei pH-Werten zwischen 2 und 10 einer Scherbeanspruchung durch strömende wässrige Elektrolytlösungen ausgesetzt. Die Scherströmung wurde im Rechteckkanal (B: 10 x L: 20 x H: 0.05mm) realisiert. Die maximale Wandscherraten betrugen etwa 2,8 x10⁴ s⁻¹ (entspr. 200 mbar Druckdifferenz über dem Kanal). Die Schichten erwiesen sich unter diesen Bedingungen als stabil. Der Nachweis der Stabilität erfolgte durch XPS-Messungen vor und nach der Scherbeanspruchung der Schichten.

### Beispiel 6: Verwendung hydrophilierter Partikel

Tonmineralien in der Größe von 10 nm bis 100 µm, bevorzugt 20 nm bis 5 µm, die als partikelförmiges Trägermaterial unter Verwendung des erfindungsgemäßen Verfahrens mit Cellulose beschichtet wurden, werden als schwer entflammbare Baumwolle verwendet.

## Patentansprüche

1. Verfahren zur Herstellung von mehrschichtigen Flächengebilden, Partikeln oder Fasern mit den getrennten Schritten
(a) Aufbringen eines reaktiven Polycarbonsäurederivats auf ein flächiges, partikelförmiges oder faserförmiges Trägermaterial, das bereits gegenüber dem Polycarbonsäurederivat reaktive, zur kovalenten Bindung befähigte Gruppen enthält oder vorab damit versehen worden ist,
(b) gegebenenfalls Erwärmen des in Schritt (a) behandelten Trägermaterials auf 60°C bis 130°C unter Beschleunigung, Vervollständigung oder weiterer Optimierung der kovalenten Bindungen,
(c) Aufbringen von gegenüber dem Polycarbonsäurederivat zu kovalenter Bindung befähigter Cellulose auf das Trägermaterial.

2. Verfahren nach Anspruch 1, **dadurch gekennzeichnet, dass** das reaktive Polycarbonsäurederivat ein Copolymer ist enthaltend als Monomere ein reaktives Carbonsäurederivat und eine Verbindung der Formel CH₂=CH-R mit R gleich H, Alkyl mit 1 bis 12 C-Atomen, O-Alkyl mit 1 bis 12 C-Atomen, Aryl, oder Heteroaryl.

3. Verfahren nach einem der Ansprüche 1 oder 2, **dadurch gekennzeichnet, dass** das Aufbringen des reaktiven Polycarbonsäurederivats in Schritt (a) aus einer Lösung von 0,05 Gew.-% bis 0,2 Gew.-% des reaktiven Polycarbonsäurederivats in organischen Lösungsmitteln erfolgt.

4. Verfahren nach einem der Ansprüche 1 bis 3, **dadurch gekennzeichnet, dass** das Trägermaterial aus Siliziumverbindungen, Metallen, Kunststoffen oder Naturfasern besteht und in beliebiger Form vorliegt.

5. Verfahren nach einem der Ansprüche 1 bis 4, **dadurch gekennzeichnet, dass** die reaktiven, zur kovalenten Bindung befähigten Gruppen des Trägermaterials ausgewählt sind aus der Gruppe bestehend aus reaktiven Amino-, Hydroxyl-, Sulfhydryl- und Carboxylgruppen.

6. Verfahren nach einem der Ansprüche 1 bis 5, **dadurch gekennzeichnet, dass** Trägermaterial, das keine gegenüber der Polycarbonsäure oder einem ihrer Derivate reaktiven, zur kovalenten Bindung befähigten Gruppen enthält, vor Durchführung von Schritt (a) durch Umsetzung mit Amin-terminierten Alkylsilanen oder durch Niederdruck-Plasmabehandlung in ammoniakalischen Atmosphären mit reaktiven Aminogruppen versehen wird.

7. Verfahren nach einem der Ansprüche 1 bis 6, **dadurch gekennzeichnet, dass** die Cellulose bei 90°C bis 115°C in N-Methylmorpholinmonohydrat gelöst wird, 0 Gew.-% bis 50 Gew.-%, DMSO oder DMF zugegeben werden und die Cellulose in Schritt (c) bei einer Temperatur von 70°C bis 90°C aus einer Lösung von 1 Gew.-% bis 4 Gew.-% Cellulose in N-Methylmorpholinmonohydrat auf ein gegebenenfalls auf 40°C bis 120°C vortemperiertes Trägermaterial aufgebracht wird und in einem weiteren Schritt (d) die Cellulose in deionisiertem H₂O Isopropanol oder einer Mischung aus beiden Lösungsmitteln auf dem Trägermaterial ausgefällt wird.

8. Mehrschichtige Flächengebilde, Partikel oder Fasern, enthaltend kovalent an ein flächiges, partikelförmiges oder faserförmiges Trägermaterial gebundene reaktive Polycarbonsäuren und eine Celluloseschicht, **dadurch gekennzeichnet, dass** die Celluloseschicht aus einer ersten Celluloseschicht, die kovalent an die reaktiven Polycarbonsäuren gebunden ist und einer zweiten Celluloseschicht, die nicht-kovalent an die erste Celluloseschicht angebunden ist, besteht.

9. Mehrschichtige Flächengebilde, Partikel oder Fasern nach Anspruch 8, **dadurch gekennzeichnet, dass** die Schichtdicke der reaktiven Polycarbonsäure 1 nm bis 20 nm, die Schichtdicke der ersten Celluloseschicht 2 nm bis 20 nm, und die Schichtdicke der zweiten Celluloseschicht 15 nm bis 200 nm beträgt.

10. Verwendung eines Verfahrens zur Herstellung von mehrschichtigen Flächengebilden, Partikeln oder Fasern nach einem der Ansprüche 1 bis 7 zur Hydrophilierung von Oberflächen, wobei die Oberflächen, die durch das Verfahren hydrophiliert werden, das flächige, partikelförmige oder faserförmige Trägermaterial bilden.

11. Verwendung von mehrschichtigen Flächengebilden, Partikeln oder Fasern nach einem der Ansprüche 8 und 9 zur Hydrophilierung von Oberflächen.

## Claims

1. A process for producing multilayered sheetlike structures, particles or fibers, the process comprising the separate steps of
(a) applying a reactive polycarboxylic acid derivative atop a sheetlike, particulate or fibrous carrier material already comprising, or previously provided with, groups reactive toward, capable of covalent bonding with, the polycarboxylic acid derivative,
(b) if appropriate heating the carrier material treated in step (a) to a temperature in the range from 60°C to 130°C to hasten, complete or further optimize the covalent bonds,
(c) applying atop the carrier material a cellulose capable of covalent bonding with the polycarboxylic acid derivative.

2. The process according to claim 1 wherein the reactive polycarboxylic acid derivative is a copolymer comprising as monomers a reactive carboxylic acid derivative and a compound of the formula CH₂=CH-R where R is H, alkyl having from 1 to 12 carbon atoms, 0-alkyl having from 1 to 12 carbon atoms, aryl, or heteroaryl.

3. The process according to claim 1 or claim 2 wherein the applying of the reactive polycarboxylic acid derivative in step (a) is effected from a solution of from 0.05% by weight to 0.2% by weight of the reactive polycarboxylic acid derivative in an organic solvent.

4. The process according to any one of claims 1 to 3 wherein the carrier material consists of silicon compounds, metals, plastics or natural fibers and is in any desired form.

5. The process according to any one of claims 1 to 4 wherein the reactive groups of the carrier material which are capable of covalent bonding are selected from the group consisting of reactive amino, hydroxyl, sulfhydryl and carboxyl groups.

6. The process according to any one of claims 1 to 5 wherein carrier material comprising no groups reactive toward, capable of covalent bonding with, the polycarboxylic acid or one of its derivatives is provided with reactive amino groups by reacting with amine-terminated alkylsilanes or by low pressure plasma treatment in ammoniacal atmospheres before step (a) is carried out.

7. The process according to any one of claims 1 to 6 wherein the cellulose is dissolved in N-methylmorpholine monohydrate at a temperature in the range from 90°C to 115°C, from 0% by weight to 50% by weight of DMSO or DMF is added and the cellulose is applied in step (c) at a temperature in the range from 70°C to 90°C from a solution of from 1% by weight to 4% by weight of cellulose in N-methylmorpholine monohydrate to a carrier material which has if appropriate been pretempered to a temperature in the range from 40°C to 120°C and, in a further step (d), the cellulose is precipitated in deionized H₂O, isopropanol or a mixture thereof on the carrier material.

8. Multilayered sheetlike structures, particles or fibers, comprising reactive polycarboxylic acids bound to a sheetlike, particulate or fibrous carrier material by a covalent bond and a cellulose layer, wherein the cellulose layer consists of a first cellulose layer, bound covalently to the reactive polycarboxylic acids, and a second cellulose layer, bound noncovalently to the first cellulose layer.

9. The multilayered sheetlike structures, particles or fibers according to claim 8 wherein the layer thickness of the reactive polycarboxylic acid is in the range from 1 nm to 20 nm, the layer thickness of the first cellulose layer is in the range from 2 nm to 20 nm, and the layer thickness of the second cellulose layer is in the range from 15 nm to 200 nm.

10. The use of a process for production of multilayered sheetlike structures, particles or fibers according to any one of claims 1 to 7 for hydrophilicizing surfaces, the surfaces which are hydrophilicized by the process forming the sheetlike, particulate or fibrous carrier material.

11. The use of multilayered sheetlike structures, particles or fibers according to either of claims 8 and 9 for hydrophilicizing surfaces.

## Revendications

1. Procédé de fabrication de structures plates, de particules ou de fibres multicouches comportant les étapes distinctes consistant à :
(a) déposer un dérivé réactif d'acide polycarboxylique sur un matériau support plat, en forme de particule ou en forme de fibre, ledit matériau support contenant déjà ou ayant été muni au préalable de groupements aptes à une liaison covalente, réactifs avec le dérivé d'acide polycarboxylique,
(b) éventuellement chauffer le matériau support traité à l'étape (a) de 60°C à 130°C avec accélération, enrichissement ou autre optimisation des liaisons covalentes,
(c) déposer sur le matériau support de la cellulose apte à former une liaison covalente avec le dérivé d'acide polycarboxylique.

2. Procédé selon la revendication 1, **caractérisé en ce que** le dérivé d'acide polyca-rboxylique est un polymère qui comprend comme monomères un dérivé réactif d'acide carboxylique et un composé de formule CH₂=C_{H}-_{R}, avec R représentant H, un alkyle ayant de 1 à 12 atomes de carbone, un O-alkyle ayant de 1 à 12 atomes de carbone, un aryle ou un hétéroaryle.

3. Procédé selon l'une quelconque des revendications 1 ou 2, **caractérisé en ce que** le dépôt du dérivé réactif d'acide polycarboxylique à l'étape (a) est effectué à partir d'une solution de en poids à 0,2 % en poids du dérivé réactif d'acide polycarboxylique dans des solvants organiques.

4. Procédé selon l'une quelconque des revendications 1 à 3, **caractérisé en ce que** le matériau support est constitué de composés de silicium, de métaux, de plastiques ou de fibres naturelles et se présente sous une forme quelconque.

5. Procédé selon l'une quelconque des revendications 1 à 4, **caractérisé en ce que** les groupements réactifs, aptes à une liaison covalente, du matériau support sont choisis dans le groupe constitué des groupements réactifs amino, hydroxyle, sulfhydryle et carboxyle.

6. Procédé selon l'une quelconque des revendications 1 à 5, **caractérisé en ce que** le matériau support qui ne contient pas de groupements réactifs avec l'acide polycarboxylique ou un de ses dérivés, aptes à la formation d'une liaison covalente, est muni de groupements amino réactifs avant la réalisation de l'étape (a) par réaction avec des alkylsilanes à terminaison amine ou par traitement plasma sous faible pression en atmosphères ammoniacales.

7. Procédé selon l'une quelconque des revendications 1 à 6, **caractérisé en ce que** la cellulose est dissoute dans du monohydrate de N-méthylmorpholine de 90 °C à 115 °C, 0 % en poids à 50 % en poids de DMSO ou de DMF sont ajoutés et, à l'étape (c), la cellulose est déposée sur un matériau support éventuellement prétempéré de 40 °C à 120 °C à partir d'une solution de 1 % en poids à 4 % en poids de cellulose dans du monohydrate de N-méthylmorpholine, à une température de 70°C à 90°C, puis dans une étape (d) ultérieure, la cellulose est précipitée sur le matériau support dans H₂O déionisée, dans de l'isopropanol ou dans un mélange des deux solvants.

8. Structures plates, particules ou fibres multicouches, contenant une couche de cellulose et des acides polycarboxyliques réactifs reliés de manière covalente à un matériau support plat, en forme de particule ou en forme de fibre, **caractérisées en ce que** la couche de cellulose est constituée d'une première couche de cellulose qui est reliée de manière covalente aux acides polycarboxyliques réactifs et d'une seconde couche de cellulose qui est reliée de manière non covalente à la première couche de cellulose.

9. Structures plates, particules ou fibres multicouches selon la revendication 8, **caractérisées en ce que** l'épaisseur de la couche d'acides polycarboxyliques réactifs est de 1 nm à 20 nm, l'épaisseur de la première couche de cellulose est de 2 nm à 20 nm et l'épaisseur de la seconde couche de cellulose est de 15 nm à 200 nm.

10. Utilisation d'un procédé de fabrication de structures plates, de particules ou de fibres multicouches selon l'une quelconque des revendications 1 à 7 pour l'hydrophilisation de surfaces, les surfaces qui sont rendues hydrophiles par le procédé constituant le matériau support plat, en forme de particule ou en forme de fibre.

11. Utilisation de structures plates, de particules ou de fibres multicouches selon l'une quelconque des revendications 8 et 9 pour l'hydrophilisation de surfaces.
